# EUROPEAN PATENT APPLICATION

(11) **EP 2 540 957 A1**
(43) Date of publication of application: **02.01.2013**
(21) Application number: 11172151.0
(22) Date of filing: 30.06.2011
(51) Int. Cl.: E21B 41/00, E21B 47/08, E21B 4/18

(54) **Downhole tool for determining laterals**

(71) Applicant: Welltec A/S, 3450 Allerød (DK)
(72) Inventor: Hallundbaek, Jørgen, 3230 Græsted (DK); Kjaersgaard-Rasmussen, Jimmy, 3460 Birkerød (DK)
(74) Representative: Hoffmann Dragsted A/S

(57) **Abstract**

The present invention relates to a downhole tool (1) for determining laterals (2) in a borehole wall (3) or a borehole casing, comprising a tool housing (5) extending along a longitudinal axis (6) and having a circumference perpendicular to the longitudinal axis and adapted to be lowered into a well, a plurality of sonic transceivers (7), each sonic transceiver transmitting sonic signals from the housing and receiving sonic signals reflected from the borehole wall or borehole casing in a predefined angular segment, wherein the plurality of sonic transceivers are arranged along the circumference of the tool housing having a mutual distance and are capable of transmitting sonic signals radially away from the tool housing in an entire central angle of 360 degrees towards the borehole wall or borehole casing and wherein, during use, one sonic transceiver, during a pulse time, transmits a sonic signal in the predefined angular segment of that sonic transmitter, and wherein one sonic transceiver, during a subsequent echo time, receives a reflected sonic signal from the borehole wall or borehole casing, and wherein an absence of the received reflected sonic signal, during the subsequent echo time, indicates a lateral. Furthermore, the invention relates to a downhole system and a method of determining a position of a lateral.

## Description

### Field of the invention

The present invention relates to a downhole tool for determining laterals in a borehole wall or a borehole casing, comprising a tool housing extending along a longitudinal axis and having a circumference perpendicular to the longitudinal axis and adapted to be lowered into a well, a plurality of sonic transceivers, each sonic transceiver transmitting sonic signals from the housing and receiving sonic signals reflected from the borehole wall or borehole casing in a predefined angular segment.

### Background art

Wellbores with multiple forked branches and laterals reduce overall costs, increase production and improve reservoir drainage. These types of wells can increase recoverable reserves, make reservoirs easier to manage, and are growing in popularity. However, constructing complicated well profiles is challenging and risky. The latest applications and system developments are convincing operators that multilateral advantages outweigh the disadvantages and therefore the need for navigating tools in multilateral wells are currently increasing. Because of the capability to more thoroughly drain reservoirs vertically and horizontally, recoverable reserves per well and per field are increased considerably while both capital and operating costs per well and per field are minimised. In fact, the cost of achieving the same degree of drainage with conventional wells would be prohibitive in most cases, especially in the case of e.g. deepwater subsea developments. Multilateral wells allow costs to be amortised over several reservoir penetrations and have in some cases eliminated the need for infill drilling. In heterogeneous reservoirs with layers, compartments or randomly oriented natural fractures, more pockets of oil and gas can be exploited and an increased number of fractures can be intersected by drilling multilateral wells. Visual representations using light, lasers, infrared light etc. have the disadvantage of being limited during drilling due to mud flow or during production due to oil-bearing liquids. The use of sonic measurements for positioning and measurement of fluid velocities etc. are therefore increasingly being developed for these purposes. However, determination of laterals is problematic since sonic measurements typically take advantage of repeating pattern measurements with knowledge of Doppler effects, which cannot be applied to the determination of laterals.

### Summary of the invention

It is an object of the present invention to wholly or partly overcome the above disadvantages and drawbacks of the prior art. More specifically, it is an object to provide an improved downhole tool capable of determining downhole laterals in multilateral wells.

The above objects, together with numerous other objects, advantages, and features, which will become evident from the below description, are accomplished by a solution in accordance with the present invention by a downhole tool for determining laterals in a borehole wall or a borehole casing, comprising:
- a tool housing extending along a longitudinal axis and having a circumference perpendicular to the longitudinal axis and adapted to be lowered into a well,
- a plurality of sonic transceivers, each sonic transceiver transmitting sonic signals from the housing and receiving sonic signals reflected from the borehole wall or borehole casing in a predefined angular segment,
wherein the plurality of sonic transceivers are arranged along the circumference of the tool housing having a mutual distance and are capable of transmitting sonic signals radially away from the tool housing in an entire central angle of 360 degrees towards the borehole wall or borehole casing and wherein, during use, one sonic transceiver, during a pulse time, transmits a sonic signal in the predefined angular segment of that sonic transmitter, and wherein one sonic transceiver, during a subsequent echo time, receives a reflected sonic signal from the borehole wall or borehole casing, and wherein an absence of the received reflected sonic signal, during the subsequent echo time, indicates a lateral.

In one embodiment of the invention, the sonic transceivers may be arranged equidistantly along the circumference of the tool housing having a fixed mutual distance.

In another embodiment, more than one transceiver may be receiving during the echo time.

Also, more than one transceiver may be transmitting during the pulse time.

Furthermore, the downhole tool may comprise at least four sonic transceivers, each transceiver covering at least one forth of the entire central angle such as at least eight sonic transceivers, each transceiver covering at least one eighth of the entire central angle.

Moreover, the downhole tool may comprise an array of sonic transceivers covering the entire central angle.

Additionally, a plurality of sonic signals may be transmitted during the pulse time in different predefined angular segments.

The downhole tool according to the present invention may further comprise a plurality of second sonic transceivers arranged at a longitudinal distance away from the plurality of sonic transceivers and arranged along the circumference of the tool housing having a mutual distance and being capable of transmitting sonic signals radially away from the tool housing in an entire central angle of 360 degrees towards the borehole wall or borehole.

The present invention also relates to a downhole system comprising:
- a wireline,
- a tool string,
- a driving unit,
- a lateral locator, and
- an operational tool for operating in a lateral,
wherein the system further comprises a downhole tool for determining laterals as described above.

In one embodiment, the operational tool may be a logging tool, a key tool, a milling tool or a drilling tool.

Said downhole system may further comprise a positioning tool, such as a casing collar locator.

Also, the present invention relates to a method of determining a position of a lateral, comprising the steps of:
- moving the downhole tool to a first position in the borehole,
- conducting a series of pulse/echo measurements comprising:
   - transmitting a sonic signal by a sonic transceiver in a first angular segment during a first pulse time,
   - recording if a reflected sonic signal is received by a sonic transceiver during a first echo time,
   - transmitting a sonic signal by a neighbouring sonic transceiver in a second angular segment during a second pulse time,
   - recording if a reflected sonic signal is received by a sonic transceiver during a second echo time,
- continuing the series of pulse/echo measurements at the first position until all angular segments along the entire circumference of the tool housing has been investigated using the plurality of sonic transceivers,
- moving the downhole tool to a second position in the borehole,
- conducting a second series of pulse/echo measurements at the second position in the borehole,
- determining the position of the lateral from the absence of received reflected sonic signals in a subset of the measurements, indicating the position of the lateral.

The method described above may further comprise the step of inserting an operational tool into the lateral.

Finally, the method as described above may further comprise a step of forcing the downhole tool into the lateral with a lateral locator tool.

### Brief description of the drawings

The invention and its many advantages will be described in more detail below with reference to the accompanying schematic drawings, which for the purpose of illustration show some non-limiting embodiments and in which
Fig. 1 shows a downhole tool string with a tool for determining laterals,
Fig. 2 shows a cross-sectional view of a tool for determining laterals,
Fig. 3a shows graphical representations of the data coming from a tool for determining laterals to visualise the position of a lateral having three different numbers of transceivers with tool,
Fig. 3b shows a tool corresponding to the graphical representations of the data in Fig. 3a having a low number of transmitters,
Fig. 3c shows graphical representations of the data coming from a tool having more transceivers than the tool of Fig. 3b,
Fig. 3d shows a tool corresponding to the graphical representations of the data in Fig. 3c,
Fig. 3e shows graphical representations of the data coming from a tool having more transceivers than the tool of Fig. 3d,
Fig. 3f shows a tool corresponding to the graphical representations of the data in Fig. 3e,
Fig. 4 shows a downhole tool string with a tool for determining laterals comprising a second set of sonic transceivers,
Fig. 5 shows a downhole tool string with a tool for determining laterals comprising a driving unit and a lateral locator tool.

All the figures are highly schematic and not necessarily to scale, and they show only those parts which are necessary in order to elucidate the invention, other parts being omitted or merely suggested.

### Detailed description of the invention

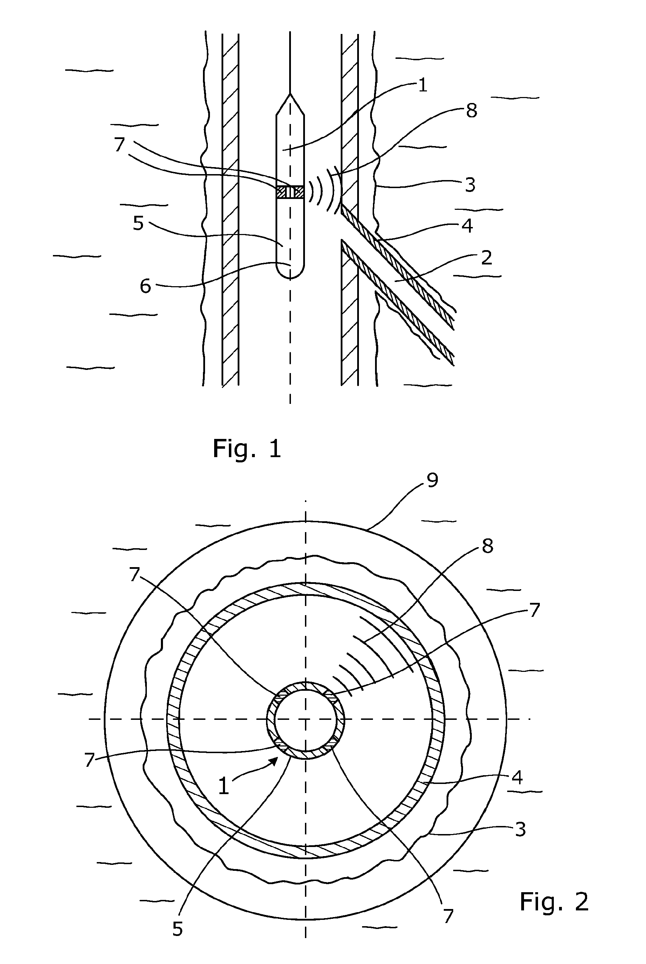

Fig. 1 shows a downhole tool 1 for determining laterals 2 in a borehole wall 3 in an openhole well or a borehole casing 4 in a cased well. The downhole tool comprises a tool housing 5 extending along a longitudinal axis 6 and a plurality of sonic transceivers 7, each sonic transceiver transmitting sonic signals 8 from the housing 5 towards the borehole wall 3 or the borehole casing 4 and receiving sonic signals 8 reflected from the borehole wall 3 or borehole casing 4.

Fig. 2 shows how the plurality of sonic transceivers 7 are arranged along the circumference of the tool housing 5 having a mutual distance and are capable of transmitting sonic signals 8 radially away from the tool housing 5 in a predefined angular segment 9 in an entire central angle of 360 degrees towards the borehole wall 3 or borehole casing 4. During use, one transceiver 7 transmits a sonic signal 8 during a pulse time in the predefined angular segment 9 of that sonic transmitter 7, and during a subsequent echo time, one sonic transceiver 7 receives a reflected sonic signal 8 from the borehole wall 3 or borehole casing 4, and an absence of the received reflected sonic signal 8 during the subsequent echo time indicates the lateral 2. This is due to the fact that when there is no casing wall, the signal cannot be reflected and the signal fades.

The sonic transceivers 7 may be arranged equidistantly along the circumference of the tool housing 5 to provide for symmetric measurements of the surrounding borehole 3 or borehole casing 4 and divide the annular space between the tool housing and the casing into predefined angular segments 9 of equal size.

To increase the reliability of the measurements, several of the transceivers may be receiving during the echo time to ensure that reflected sonic signals will always be received by at least one of the transceivers. In case of very rough surfaces of the casing or borehole wall or other effects altering the paths of the sonic signals, the reflected signals may be received by a transceiver located far away from the transmitting transceiver, e.g. on the other side of the housing. By receiving reflected signals using several transceivers, the redundancy of the system will be improved. Receiving with several transceivers may be done by simultaneous "listening" with several transceivers or by doing a series of measurements in which one transceiver is used to transmit signals and several transceivers are used to receive signals one at a time.

Furthermore, if the physical conditions in the borehole allow, several transceivers may be used simultaneously to transmit signals. Physical conditions which may be appropriate for these types of measurements may be a situation in which the downhole tool 1 fills up nearly the entire annular space in the borehole. Under these conditions, it may be possible to do isolated measurements on several sides of the tool housing without interfering with the other measurements. In this way, measurement time may be drastically decreased, e.g. reduced by half by running two simultaneous series of measurements with transceivers placed diagonally on two sides of the tool housing 5.

Since space is very limited when working downhole and information stream towards the surface is also limited, the computational power needed to conduct useful measurements downhole need to be minimised. Therefore, the use of four to ten transceivers placed equidistantly along the circumference has proven, by experiments, to be sufficient for the determination of laterals without generating too much data, which has to be processed downhole or sent to the surface. Therefore, sonic transceivers covering angular segments of approximately 36 to 90 degrees of the full centre angle of 360 degrees are preferred.

Due to increasing performances and minimisation of computers and computational power in general today, arrays of transceivers covering the entire central angle and even being resolved along the longitudinal axis of the tool may prospectively be advantageous and thereby also provide increased resolution in the determination of laterals.

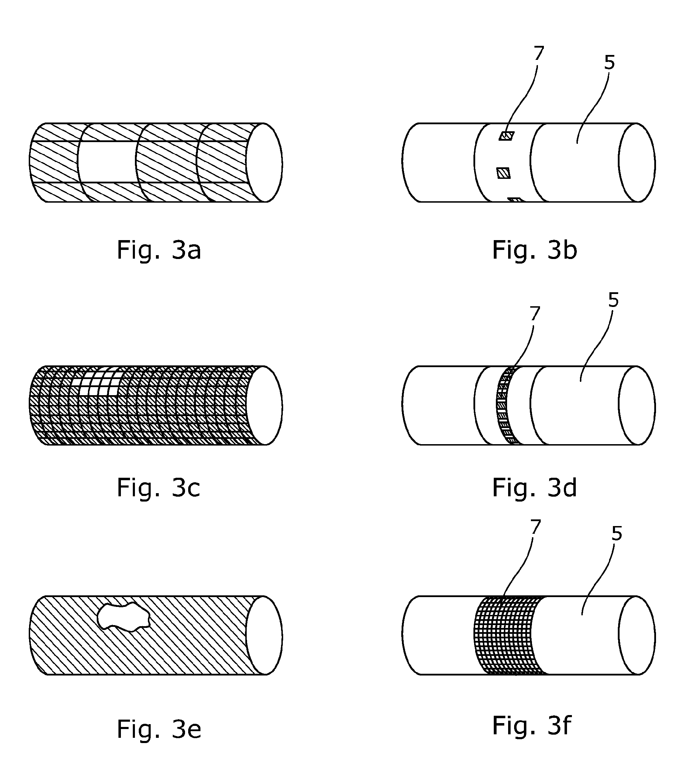

Fig. 3a shows a graphical cylindrical representation of the data coming from a corresponding downhole tool 1 shown in Fig. 3b for determining laterals 2 to visualise the position of the lateral 2 for the user. Each square on the cylindrical representation corresponds to one measurement at one given depth in the well. The downhole tool 1 is moved down through the well along the longitudinal axis 6. At a given depth in the well, a series of measurements using the plurality of sonic transceivers 7 are made to investigate the surroundings of the downhole tool at that specific depth. Each of the series of measurements corresponds to one ring of squares on the cylindrical representation.

Figs. 3c shows a graphical cylindrical representation of the data coming from a corresponding downhole tool 1 shown in Fig. 3d capable of determining laterals 2 with an increased resolution. The increased resolution may be obtained by placing a greater number of sonic transceivers along the circumference of the housing, which increases the resolution by decreasing the resolvable angular segments. Furthermore the resolution may be increased along the longitudinal axis by moving the downhole tool in smaller steps along the longitudinal axis.

Figs. 3e shows a graphical cylindrical representation of the data coming from a corresponding downhole tool 1 shown in Fig. 3f capable of determining laterals 2 with an even higher resolution. The increased resolution may be obtained by arranging arrays of transceivers such as an ultrasonic transducer array along the circumference of the tool housing. The resolution along the longitudinal axis may be equally increased by such arrays if two-dimensional arrays are arranged along the circumference of the tool housing providing resolution in both an angular direction and the longitudinal direction.

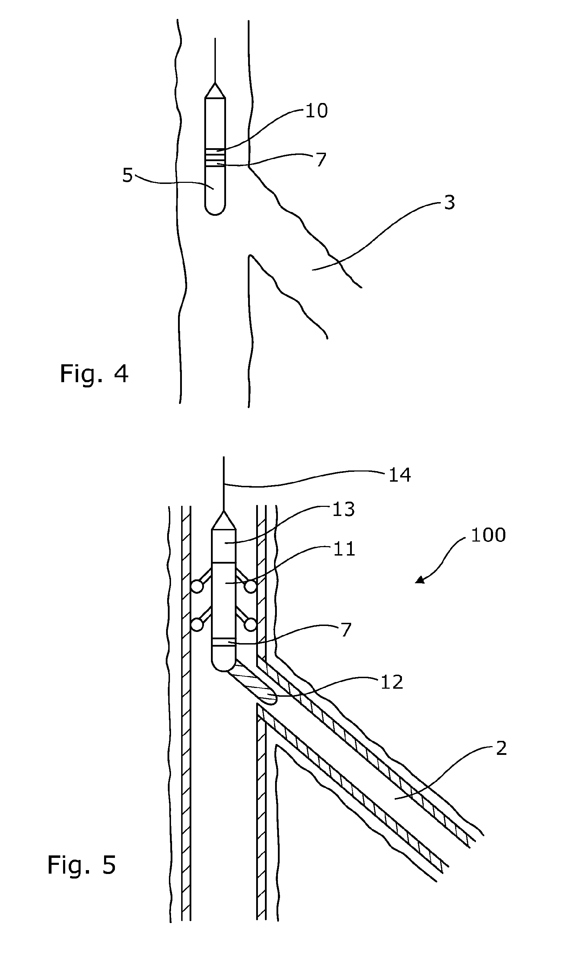

Fig. 4 shows a downhole tool 1 in a borehole 3 comprising a lateral 2 without a borehole casing 4. The downhole tool further comprises a second plurality of sonic transceivers 10. Arranging a second plurality of sonic receivers 10 has the advantage of helping the redundancy of the system, such that the tool may still function in case of breakdown of the plurality of sonic transceivers. Furthermore, the second plurality of transceivers may provide a downhole tool 1 capable of determining a lateral faster, since two series of measurements may be made per one movement of the downhole tool. Adding even more pluralities of transceivers may further increase the redundancy of the tool, the resolution of a determination of a lateral and/or further increase a speed of the determination of a lateral.

Fig. 5 shows a downhole system 100 for determination a laterals comprising a driving unit 11 for conveying the downhole tool 1 along the longitudinal axis deeper into the borehole or retracting the downhole tool 1 by a wireline 14. Furthermore, the downhole tool comprises a lateral locator tool 12 for engaging the lateral 2 after the position of the lateral 2 has been determined by the plurality of sonic transceivers 7. By engaging the lateral 2 with a lateral locator tool 12, the downhole tool 1 may be forced to enter the lateral, thereby allowing any operational tools 13 comprised in the tool to enter the lateral 2 and perform the function of the operational tool 13 in the lateral 2. The operational tool 13 may be a logging tool, a key tool, a milling tool or a drilling tool. The system may further comprise a positioning tool using magnets and magnetometre, such as a casing collar locator.

In a method of determining a position of a lateral according to the invention, the downhole tool 1 is moved to a first position in the borehole for initialising the measurement for determining the position of a lateral 2. At this first position of the downhole tool 1, a series of pulse/echo measurements is conducted, i.e. transmitting a sonic signal referred to as a pulse and receiving the reflected sonic signal referred to as an echo. The pulse signal is initially transmitted by a sonic transceiver in a first angular segment 9 radially away from the downhole tool towards the borehole or borehole casing during a first pulse time. The sonic signal is reflected by the borehole or borehole casing back towards the downhole tool and recorded if the reflected sonic signal is received by a sonic transceiver during a first echo time. If no sonic signal is received during the first echo time, it may indicate that the downhole tool is opposite to a lateral in the borehole, since the transmitted sonic signal will be propagating into the lateral instead of being reflected by the borehole or borehole casing. The lack of reflected signal may also be due to the transceiver not being able to receive the reflected signal but if this is the case, it is confirmed in the subsequent measurement. If there continues to be no reflected signal in a certain angular segment 9, it indicates that a lateral is present as illustrated in Fig. 3c.

The series of measurements continues in the first position by transmitting a new sonic signal by a neighbouring sonic transceiver in a second angular segment during a subsequent second pulse time, and in the same way the reflected sonic signal is recorded if a sonic transceiver receives the reflected signal during a second echo time. This type of pulse/echo measurements are continued at the first position until all angular segments along the entire circumference of the tool housing has been investigated. Different schemes may be set up for the sequence of pulsing transceivers, transmitting transceivers or receiving transceivers, duration of pulse time, duration of echo time, frequencies, amplitudes etc. To improve redundancy of the method, each of the transceivers receiving the reflected signal may be used to record the reflected signal from one transmitting transceiver by either simultaneously "listening" with all transceivers or "listening" with only one transceiver during the echo time and transmitting a new pulse signal before listening with the next receiver etc. When all angular segments have been investigated, the downhole tool is moved to a second position in the borehole and a second series of pulse/echo measurements is conducted at the second position in the borehole. From the conducted series of measurements, the position of the lateral may be determined from the absence of received reflected sonic signals in a subset of the measurements, since the absence of a reflected signal indicates that the measurement was conducted at a position opposite to the position of the lateral.

By placing the downhole tool for determining laterals in a tool string 100 along with other operational tools 13 as mentioned, the tool string 100 may effectively perform tasks in both the borehole 3 or main casing and a lateral 2 of the borehole 3 or the casing. Furthermore, by using a casing collar locator (CCL), the position of the lateral may be stored in a memory available for the user for future use, which will allow the user to revert to the same lateral faster on subsequent operations.

Although the invention has been described in the above in connection with preferred embodiments of the invention, it will be evident for a person skilled in the art that several modifications are conceivable without departing from the invention as defined by the following claims.

## Claims

1. A downhole tool (1) for determining laterals in a borehole wall (3) or a borehole casing (4), comprising:
- a tool housing (5) extending along a longitudinal axis (6) and having a circumference perpendicular to the longitudinal axis and adapted to be lowered into a well,
- a plurality of sonic transceivers (7), each sonic transceiver transmitting sonic signals from the housing and receiving sonic signals (8) reflected from the borehole wall or borehole casing in a predefined angular segment (9),
wherein the plurality of sonic transceivers are arranged along the circumference of the tool housing having a mutual distance and are capable of transmitting sonic signals radially away from the tool housing in an entire central angle of 360 degrees towards the borehole wall or borehole casing and wherein, during use, one sonic transceiver, during a pulse time, transmits a sonic signal in the predefined angular segment of that sonic transmitter, and wherein one sonic transceiver, during a subsequent echo time, receives a reflected sonic signal from the borehole wall or borehole casing, and wherein an absence of the received reflected sonic signal, during the subsequent echo time, indicates a lateral.

2. A downhole tool according to claim 1, wherein the sonic transceivers are arranged equidistantly along the circumference of the tool housing having a fixed mutual distance.

3. A downhole tool according to claim 1 or 2, wherein more than one transceiver are receiving during the echo time.

4. A downhole tool according to any of the claims 1-3, wherein more than one transceiver are transmitting during the pulse time.

5. A downhole tool according to any of the preceding claims, wherein the downhole tool comprises at least four sonic transceivers, each transceiver covering at least one forth of the entire central angle such as at least eight sonic transceivers, each transceiver covering at least one eighth of the entire central angle.

6. A downhole tool according to any of the preceding claims, wherein the downhole tool comprises an array of sonic transceivers covering the entire central angle.

7. A downhole tool according to any of the preceding claims, wherein a plurality of sonic signals can be transmitted during the pulse time in different predefined angular segments.

8. A downhole tool according to any of the preceding claims, further comprising a plurality of second sonic transceivers (10) arranged at a longitudinal distance away from the plurality of sonic transceivers and arranged along the circumference of the tool housing having a mutual distance and being capable of transmitting sonic signals radially away from the tool housing in an entire central angle of 360 degrees towards the borehole wall or borehole.

9. A downhole system (200) comprising:
- a wireline (14),
- a tool string (100),
- a driving unit (11),
- a lateral locator (12), and
- an operational tool (13) for operating in a lateral,
wherein the system further comprises a downhole tool for determining laterals according to any of the claims 1-9.

10. A downhole system according to claim 9, wherein the operational tool is a logging tool, a key tool, a milling tool or a drilling tool.

11. A downhole system according to claim 9 or 10, further comprising a positioning tool (not shown), such as a casing collar locator.

12. A method of determining a position of a lateral comprising the steps of:
- moving the downhole tool according to any of the preceding claims 1-8 to a first position in the borehole,
- conducting a series of pulse/echo measurements comprising:
- transmitting a sonic signal by a sonic transceiver in a first angular segment during a first pulse time,
- recording if a reflected sonic signal is received by a sonic transceiver during a first echo time,
- transmitting a sonic signal by a neighbouring sonic transceiver in a second angular segment during a second pulse time,
- recording if a reflected sonic signal is received by a sonic transceiver during a second echo time,
- continuing the series of pulse/echo measurements at the first position until all angular segments along the entire circumference of the tool housing has been investigated using the plurality of sonic transceivers,
- moving the downhole tool to a second position in the borehole,
- conducting a second series of pulse/echo measurements at the second position in the borehole,
- determining the position of the lateral from the absence of received reflected sonic signals in a subset of the measurements, indicating the position of the lateral.

13. A method according to claim 12, further comprising the step of inserting an operational tool into the lateral.

14. A method according to claim 12 or 13, further comprising a step of forcing the downhole tool into the lateral with a lateral locator tool.
